# EUROPÄISCHE PATENTANMELDUNG

(11) **EP 3 442 106 A1**
(43) Veröffentlichungstag der Anmeldung: **13.02.2019**
(21) Anmeldenummer: 17185345.0
(22) Anmeldetag: 08.08.2017
(51) Int. Cl.: H02M 7/219, B60L 15/00

(54) **OBERSPANNUNGSSENSORFREIE ANTRIEBSVORRICHTUNG**

(71) Anmelder: Siemens Aktiengesellschaft, 80333 München (DE)
(72) Erfinder: Lang, Norbert, 90765 Fürth (DE)

(57) **Zusammenfassung**

Die Erfindung betrifft eine Antriebsvorrichtung (30) aufweisend einen Transformator (1) und einen Stromrichter (2), wobei der Transformator (1) eine Oberspannungsseite (11) und eine Unterspannungsseite (12) umfasst, wobei der Stromrichter (2) mit der Unterspannungsseite (12) des Transformators (1) elektrisch verbunden ist, wobei der Stromrichter (2) einen Zwischenkreis (20) mit einem ersten Messsensor (21) zur Erfassung der Zwischenkreisspannung (U_{d}) aufweist, wobei der Stromrichter (2) einen zweiten Messsensor (22) zur Erfassung des Eingangsstromes (i_{C,E}) des Stromrichters (2) und eine Regelungsvorrichtung (25) zur Generierung von Ansteuersignalen (24) für im Stromrichter (2) angeordnete Halbleiter (23) aufweist. Zur Verbesserung der Antriebsvorrichtung (30) wird vorgeschlagen, dass die Oberspannungsseite des Transformators (1) spannungswandlerfrei ausgeführt ist. Die Erfindung betrifft weiter ein Schienenfahrzeug (40) mit einer derartigen Antriebsvorrichtung (30). Ferner betrifft die Erfindung ein Verfahren zur Bestimmung eines Spannungswertes (u_{T,O}) an der Oberspannungsseite eines Transformators (1) einer derartigen Antriebsvorrichtung (30) oder eines derartigen Schienenfahrzeugs, wobei aus Messwerten des ersten Messsensors (21) und des zweiten Messensors (22), den Ansteuersignalen (24) und einem Transformatormodell (10) der Spannungswert (u_{T,O}) an der Oberseite des Transformators (1) ermittelt wird.

## Beschreibung

Die Erfindung betrifft eine Antriebsvorrichtung mit einem Transformator und einem Stromrichter, wobei der Transformator eine Oberspannungsseite und eine Unterspannungsseite umfasst, wobei der Stromrichter mit der Unterspannungsseite des Transformators elektrisch verbunden ist, wobei der Stromrichter einen Zwischenkreis mit einem ersten Messsensor zur Erfassung der Zwischenkreisspannung aufweist, wobei der Stromrichter einen zweiten Messsensor zur Erfassung des Eingangsstromes des Stromrichters und einer Regelungsvorrichtung zur Generierung von Ansteuersignalen für im Stromrichter angeordnete Halbleiter aufweist. Ferner betrifft die Erfindung ein Schienenfahrzeug mit einer derartigen Antriebsvorrichtung. Weiter betrifft die Erfindung ein Verfahren zur Bestimmung eines Spannungswertes an der Oberspannungsseite eines Transformators einer derartigen Antriebsvorrichtung oder eines derartigen Schienenfahrzeugs.

Heute bekannte Steuer- oder Regelungsverfahren für eine Antriebsvorrichtung, insbesondere eine Antriebsvorrichtung eines Schienenfahrzeugs, verwenden für die Regelung des Stromrichters, der mit dem Transformator verbunden ist, einen Messwert der Spannung an der Oberspannungsseite des Transformators. Die Spannung an der Oberspannungsseite des Transformators wird auch als Netzspannung bezeichnet. Die Oberspannungsseite des Transformators stellt die Primärwicklung dar, während die Unterspannungsseite des Transformators die Sekundärwicklung ist. Die Anzahl der Wicklungen auf der Primärseite ist größer als die Anzahl der Wicklungen auf der Sekundärseite. Daher ist die Spannung auf der Primärseite, der Oberspannungsseite, größer als auf der Sekundärseite, der Unterspannungsseite. Für die Regelung wird heutzutage der Wert der Netzspannung mittels eines Spannungssensors an der Oberspannungsseite des Transformators gemessen. Bei Netzen höherer Spannung, wie beispielsweise den im Bahnnetz üblichen Spannungen von 15kV oder 25kV, ist der Hardwareaufwand dafür nicht unerheblich. Auf Schienenfahrzeugen müssen dafür beispielsweise geschirmte Signalleitungen von der Hochspannungsausrüstung zu den Steuersystemen, insbesondere zu der Regelungsvorrichtung, des Stromrichters verlegt werden. Dies kann beispielsweise bei Triebzügen über mehrere Wagenübergänge hinweg durchaus aufwändig sein. Darüber hinaus muss der Berührschutz zur Vermeidung von Personenschäden sichergestellt sein

Der Erfindung liegt die Aufgabe zugrunde, die Antriebsvorrichtung zu verbessern.

Die Aufgabe wird durch eine Antriebsvorrichtung mit einem Transformator und einem Stromrichter gelöst, wobei der Transformator eine Oberspannungsseite und eine Unterspannungsseite umfasst, wobei der Stromrichter mit der Unterspannungsseite des Transformators elektrisch verbunden ist, wobei der Stromrichter einen Zwischenkreis mit einem ersten Messsensor zur Erfassung der Zwischenkreisspannung aufweist, wobei der Stromrichter einen zweiten Messsensor zur Erfassung des Eingangsstromes des Stromrichters und eine Regelungsvorrichtung zur Generierung von Ansteuersignalen für im Stromrichter angeordnete Halbleiter aufweist, wobei die Oberspannungsseite des Transformators spannungswandlerfrei ausgeführt ist. Ferner wird die Aufgabe durch ein Schienenfahrzeug mit einer derartigen Antriebsvorrichtung gelöst. Weiter wird die Aufgabe durch ein sowie durch ein Verfahren zur Bestimmung eines Spannungswertes an der Oberspannungsseite eines Transformators einer derartigen Antriebsvorrichtung oder eines derartigen Schienenfahrzeugs gelöst, wobei aus Messwerten des ersten Messsensors und des zweiten Messensors, den Ansteuersignalen und einem Transformatormodell der Spannungswert an der Oberseite des Transformators ermittelt wird.

Vorteilhafte Ausgestaltungen der Erfindung sind in den abhängigen Ansprüchen angegeben.

Der Erfindung liegt die Erkenntnis zugrunde, dass durch die Nutzung eines Ersatzwertverfahrens der Wert der Spannung an der Oberspannungsseite des Transformators hinreichend genau für die Regelung des Stromrichters bestimmt werden kann. Dieses Verfahren kommt vorzugsweise im Steuerungssystem des Stromrichters, insbesondere in der Regelungsvorrichtung, zur Anwendung. Es nutzt die im Stromrichter und seiner Regelungsvorrichtung bereits vorhandenen Messwerte und Signale. Dazu zählen Zwischenkreisspannung, Eingangsstrom des Stromrichters und die Ansteuersignale, auch als Ventilsteuersignale bezeichnet, des Stromrichters. Der Eingangsstrom ist der an der Wechselspannungsseite des Stromrichters gemessene Strom. Unter Berücksichtigung der hinreichend bekannten elektrischen Transformatorparameter, wie beispielsweise Übersetzungsverhältnis, Kurzschlussspannung, ohmsche Verluste und/oder Induktivitätsverhältnisse, in einem Transformatormodell ist es möglich, einen Ersatzwert zu bestimmen, der ohne nennenswerte Einschränkung anstelle des Messwerts der Spannung an der Oberspannungsseite des Transformators, auch als Netzspannung bezeichnet, verwendet werden kann. Als Transformatormodell kann dabei beispielsweise in vorteilhafter Weise ein T-Ersatzschaltbild verwendet werden.

Die bereits im Stromrichter vorliegenden Informationen und Signale werden in geeigneter Weise derart miteinander verknüpft, dass eine neue Information entsteht, die bislang messtechnisch beschafft wurde. Die Messtechnik für die Erfassung der Spannung an der Oberspannungsseite des Transformators kann folglich entfallen. Es ist somit kein Sensor zur Ermittlung der Spannung an der Oberspannungsseite mehr erforderlich. Mit anderen Worten ist die Oberspannungsseite spannungswandlerfrei ausgeführt. Damit kann der Antrieb als oberspannungssensorfreie Antriebsvorrichtung bezeichnet werden.

Der Betrieb des Stromrichters ist ohne Messwert der Netzspannung möglich. Daraus ergeben sich Vorteile, insbesondere in Bezug auf Verfügbarkeit, Preis, Gewicht und Einbauraum sowie ersatzlosen Entfall von Hardwarekomponenten.

Im Folgenden wird die Erfindung anhand der in den Figuren dargestellten Ausführungsbeispiele näher beschrieben und erläutert. Es zeigen:
- FIG 1: ein Schienenfahrzeug,
- FIG 2: einen Stromrichter und
- FIG 3: ein Regelungsschema.

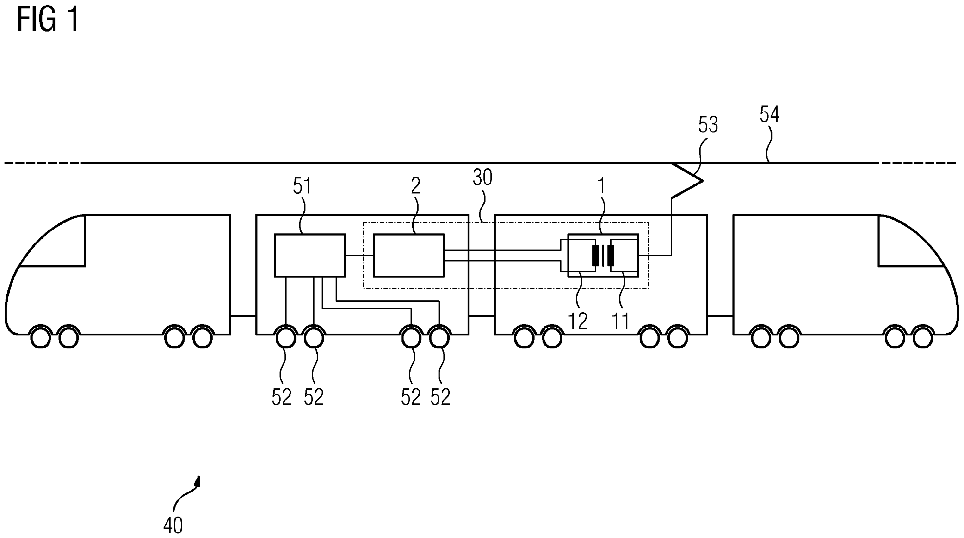

Die FIG 1 zeigt ein Schienenfahrzeug 40. In dem Schienenfahrzeug 40 ist eine Antriebsvorrichtung 30 angeordnet. Die Antriebsvorrichtung 30 weist einen Transformator 1 und einen Stromrichter 2 auf. An der Oberspannungsseite 11 des Transformators 1 ist der Transformator 1 über einen Stromabnehmer 53 mit einem Fahrdraht 54 verbunden. Aus dem Fahrdraht 54 nimmt das Schienenfahrzeug 40 elektrische Energie unter anderem für seinen Antrieb auf. Des Weiteren ist die Antriebsvorrichtung 30 mit weiteren Halbleiterkomponenten 51 verbunden, welche den Motoren 52, die für den Betrieb notwendige Spannung zur Verfügung stellen. Aus der Darstellung der FIG 1 ist zu erkennen, dass bei Anordnung von Transformator 1 und Stromrichter 2 in unterschiedlichen Wagen des Schienenfahrzeugs 40 die Informationen bzw. die elektrische Leistung über die Wagenübergänge zu transportieren ist. Durch den Wegfall eines Messsensors für die Spannung an der Oberseite 11 des Transformators 1 verringert sich der Aufwand für die Signalübertragung, insbesondere für den aufwendigen Übergang zwischen zwei Wagen, erheblich. Lediglich die Kabel für die Energieübertragung zwischen Transformator 1 und Stromrichter 2 müssen für den Wagenübergang vorgesehen werden.

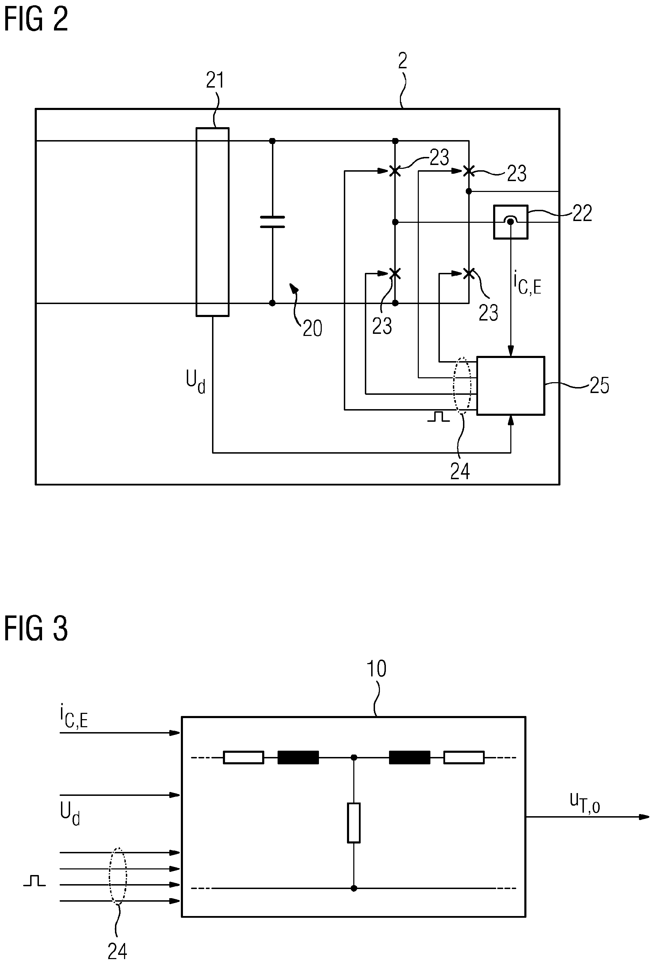

Die FIG 2 zeigt ein Ausführungsbeispiel für einen Stromrichter 2 einer Antriebsvorrichtung 30. Der Stromrichter 2 weist im Stromrichter 2 angeordnete Halbleiter 23 auf, mit denen eine Wechselspannung vom Transformator 1 in eine Gleichspannung im Zwischenkreis 20 umgeformt wird. Eine Regelungsvorrichtung 25 sendet dabei Ansteuersignale 24 an die einzelnen im Stromrichter 2 angeordneten Halbleiter 23. Diese führen entsprechende Schalthandlungen aus, um aus der vom Transformator 1 zugeführten Wechselspannung die Gleichspannung im Zwischenkreis 20 zu erzeugen. Zur Generierung der Ansteuersignale 24 wertet die Regelungsvorrichtung 25 die Signale eines ersten Messsensors 21 zur Erfassung der Zwischenkreisspannung U_{d} sowie die Signale eines zweiten Messsensors 22 zur Erfassung des Eingangsstroms i_{C,E} aus.

Die FIG 3 zeigt ein Regelungsschema für die Bestimmung der Spannung u_{T,o} an der Oberspannungsseite des Transformators 1. Für die Berechnung dieser Spannung u_{T,o} werden der Eingangsstrom i_{C,E} sowie der Wert der Zwischenkreisspannung U_{d} verwendet. Durch gleichzeitige Auswertung der Ansteuersignale 24 und unter Verwendung eines Transformatormodells 10 lässt sich die Spannung u_{T,o} rechnerisch bestimmen. Die Berechnung der der Spannung u_{T,o} an der Oberspannungsseite des Transformators 1 kann in vorteilhafter Weise in der Regelungsvorrichtung 25 des Stromrichters 1 erfolgen.

Zusammenfassend betrifft die Erfindung eine Antriebsvorrichtung aufweisend einen Transformator und einen Stromrichter, wobei der Transformator eine Oberspannungsseite und eine Unterspannungsseite umfasst, wobei der Stromrichter mit der Unterspannungsseite des Transformators elektrisch verbunden ist, wobei der Stromrichter einen Zwischenkreis mit einem ersten Messsensor zur Erfassung der Zwischenkreisspannung aufweist, wobei der Stromrichter einen zweiten Messsensor zur Erfassung des Eingangsstromes des Stromrichters und eine Regelungsvorrichtung zur Generierung von Ansteuersignalen für im Stromrichter angeordnete Halbleiter aufweist. Zur Verbesserung der Antriebsvorrichtung wird vorgeschlagen, dass die Oberspannungsseite des Transformators spannungswandlerfrei ausgeführt ist. Die Erfindung betrifft weiter ein Schienenfahrzeug mit einer derartigen Antriebsvorrichtung. Ferner betrifft die Erfindung ein Verfahren zur Bestimmung eines Spannungswertes an der Oberspannungsseite eines Transformators einer derartigen Antriebsvorrichtung oder eines derartigen Schienenfahrzeugs, wobei aus Messwerten des ersten Messsensors und des zweiten Messsensors, den Ansteuersignalen und einem Transformatormodell der Spannungswert an der Oberseite des Transformators ermittelt wird.

## Patentansprüche

1. Antriebsvorrichtung (30) aufweisend einen Transformator (1) und einen Stromrichter (2), wobei der Transformator (1) eine Oberspannungsseite (11) und eine Unterspannungsseite (12) umfasst, wobei der Stromrichter (2) mit der Unterspannungsseite (12) des Transformators (1) elektrisch verbunden ist, wobei der Stromrichter (2) einen Zwischenkreis (20) mit einem ersten Messsensor (21) zur Erfassung der Zwischenkreisspannung (U_{d}) aufweist, wobei der Stromrichter (2) einen zweiten Messsensor (22) zur Erfassung des Eingangsstromes (i_{C,E}) des Stromrichters (2) und eine Regelungsvorrichtung (25) zur Generierung von Ansteuersignalen (24) für im Stromrichter (2) angeordnete Halbleiter (23) aufweist, wobei die Oberspannungsseite des Transformators (1) spannungswandlerfrei ausgeführt ist.

2. Schienenfahrzeug (40) mit einer Antriebsvorrichtung (30) nach Anspruch 1.

3. Verfahren zur Bestimmung eines Spannungswertes (u_{T,o}) an der Oberspannungsseite eines Transformators (1) einer Antriebsvorrichtung (30) nach Anspruch 1 oder eines Schienenfahrzeugs nach Anspruch 2, wobei aus Messwerten des ersten Messsensors (21) und des zweiten Messsensors (22), den Ansteuersignalen (24) und einem Transformatormodell (10) der Spannungswert (u_{T,o}) an der Oberseite des Transformators (1) ermittelt wird.

4. Verfahren nach Anspruch 3, wobei als Transformatormodell (10) ein T-Ersatzschaltbild verwendet wird.
